**Europäisches Patentamt**

**European Patent Office**

**Office européen des brevets**

(19)

(11) Veröffentlichungsnummer: **0 243 511 B1**

(12) # EUROPÄISCHE PATENTSCHRIFT

(45) Veröffentlichungstag der Patentschrift:
14.03.90

(51) Int. Cl.⁴: **B62H 1/00, B62J 7/02**

(21) Anmeldenummer: **86105446.8**

(22) Anmeldetag: **19.04.86**

(54) **Befestigungsstück zum Anbringen von Zubehörteilen an Rahmen von Zweiradfahrzeugen.**

(43) Veröffentlichungstag der Anmeldung:
**04.11.87 Patentblatt 87/45**

(45) Bekanntmachung des Hinweises auf die Patenterteilung:
**14.03.90 Patentblatt 90/11**

(84) Benannte Vertragsstaaten:
**AT BE CH DE FR GB IT LI LU NL SE**

(56) Entgegenhaltungen:
**DE-C- 840 960**
**FR-A- 1 021 713**
**GB-A- 667 848**
**US-A- 4 328 914**
**US-A- 4 556 230**

(73) Patentinhaber: **ESGE-Marby GmbH + Co. KG., Braker Strasse 1, D-4800 Bielefeld 16(DE)**

(72) Erfinder: **Belka, Heinrich, Uchteweg 3, D-4800 Bielefeld 11(DE)**

(74) Vertreter: **Rüger, Rudolf, Dr.-Ing. et al, Patentanwälte Dr.-Ing. R. Rüger Dipl.-Ing. H.P. Barthelt Webergasse 3 Postfach 348, D-7300 Esslingen/Neckar(DE)**

## Beschreibung

Die Erfindung geht aus von einem Befestigungsstück zum Anbringen von Zubehörteilen, wie Gepäckträgern, Seitenstützen u.dgl., an zweirohrigen Abschnitten von Zweiradfahrzeugrahmen mit den Merkmalen des Oberbegriffs des Anspruches 1.

Ein gattungsgemäßes Befestigungsstück ist aus der DE-C 840 960 bekannt. Das bekannte Befestigungsstück ist prismatisch und hat im Querschnitt die Gestalt eines regulären Trapezes. Es bildet auf diese Weise zwei zueinander konvergierende Auflageflächen, die im gleichen Winkel gegenüber der Querbohrung zur Aufnahme der Befestigungsschraube geneigt sind, so daß eine Selbstzentrierung zwischen den Rahmenrohren eintritt.

Das bekannte Befestigungsstück ist, abgesehen von der Querbohrung, offensichtlich massiv und deswegen starr und unelastisch, weshalb ein sehr sorgfältiges Anziehen der in dem Querloch steckenden Befestigungsschraube erforderlich ist, um einerseits eine Deformierung der Rahmenrohre zu vermeiden und andererseits ein Selbstlösen wirksam zu verhindern. Das Anzugsmoment für die Befestigungsschraube liegt dabei in besonders engen Grenzen, wenn die Rahmenrohre, an denen sich das Befestigungsstück anlegen soll, zueinander divergieren. In einem solchen Fall, der bei Fahrrädern üblicherweise der Regelfall ist, müßte sich an sich das Klemmstück, um eine flächige Anlage an den Rahmenrohren zu erhalten, um eine Achse quer zu der Längserstreckung der Rahmenrohre kippen. An einer solchen Kippbewegung wird das Befestigungsstück durch die Befestigungsschraube gehindert, weshalb die dem konvergierenden Ende der Rahmenrohre zugewandten Kanten des Befestigungsstücks dazu neigen, sich in die Rahmenrohre seitlich einzudrücken, wenn die Befestigungsschraube zu stark angezogen wird. Wegen der Punktbelastung, die zwischen dem massiven Klemmstück und den konvergierenden Rahmenrohren auftritt, ist das zur Deformation der Rahmenrohre notwendige Anzugsmoment der Befestigungsschraube nicht allzu groß. Sobald jedoch einmal eine Deformation der Rahmenrohre eingetreten ist, ist die Festigkeit an dieser Stelle beeinträchtigt.

Wird andererseits die Befestigungsschraube nicht fest genug angezogen, besteht die Gefahr des Selbstlösens wegen der beim Betrieb unvermeidlich auftretenden erheblichen Erschütterungen.

Da das bekannte Befestigungsstück massiv ist, ist die Materialausnutzung verhältnismäßig schlecht. Ist das Befestigungsstück, wie in der Fahrradtechnik üblich, aus Stahl oder Aluminium hergestellt, weist es deshalb außerdem ein verhältnismäßig hohes Gewicht auf.

Ausgehend hiervon liegt der Erfindung die Aufgabe zugrunde, ein selbstzentrierendes Befestigungsstück zum Anbringen von Zubehörteilen, insbesondere Nachrüstteilen, an zweirohrigen Abschnitten von Zweiradfahrzeugen zu schaffen, das sich bei besserer Materialausnutzung ohne Veränderung für Rahmen mit unterschiedlichsten Abmessungen verwenden läßt, ohne daß die Gefahr der Selbstlockerung oder der Rahmenbeschädigung besteht.

Diese Aufgabe wird erfindungsgemäß durch ein Befestigungsstück mit den Merkmalen des Hauptanspruches gelöst.

Infolge der elastischen Verformbarkeit der Flansche in Verbindung mit den in den Flanschen vorgesehenen Hohlräumen wird ein Befestigungsstück erhalten, das sich beim Anziehen der Befestigungsschraube in ausreichendem Maße an den Verlauf und die Gestalt der Rahmenrohre anpaßt. Hierdurch entstehen Anlageflächen zwischen dem Befestigungsstück und den Rahmenrohren, die wesentlich größer sind als sie bei einem an sich gleichgeformten, jedoch massiven und unelastischen Befestigungsstück auftreten würden. Zufolge der größeren Anlageflächen und der begrenzten Umformung der Anlageflächen des Befestigungsstücks durch die Rahmenrohre ist zwangsläufig auch eine größere Anzugskraft der Befestigungsschraube erforderlich, um Deformationen der Rahmenrohre hervorzurufen, verglichen mit einem Befestigungsstück, das massiv ausgeführt ist.

Die Anzugsmomente zwischen dem minimalen Anzugsmoment, das eine Selbstlockerung verhindert und dem maximalen Anzugsmoment, bei dem gerade noch keine Deformation der Rahmenrohre auftritt, liegt deswegen sehr weit auseinander. Andererseits erfolgt herstellerseitig keine individuelle Anpassung des Befestigungsstücks an den jeweiligen Rahmen, sondern die erforderliche geringfügige Deformation des Befestigungsstücks erfolgt beim Anziehen der Befestigungsschraube insofern, als die Anlagefläche nach rückwärts in den Hohlraum begrenzt ausweichen kann.

Wenn bei dem Befestigungsstück beide Außenflächen jedes Flansches Anlageflächen darstellen, kann ohne weiteres jede mögliche Einbaulage verwendet werden. Es ist dann weiter möglich, auf der einen Seite des Mittelstücks eine Ansenkung für eine Senkschraube und auf der gegenüberliegenden Seite des Mittelstücks eine durchgehende Ausnehmung mit parallelen geraden Flanken und einem ebenen Grund vorzusehen, um in dieser Ausnehmung drehfest eine polygonale Mutter zu haltern. Ohne Änderung des Bauteils kann dann wahlweise die eine oder die andere Befestigungsmöglichkeit gewählt werden.

Hierbei ist es unter Umständen zweckmäßig, wenn beide Außenflächen eines jeden Flansches eben sind und unter betragsmäßig gleichen Winkeln zu der Achse der Querbohrung geneigt sind.

Eine höhere Elastizität bei gleichzeitig weiterer Materialeinsparung wird erhalten, wenn die Hohlräume die Gestalt eines Prismas haben und den zugehörigen Flansch vollständig durchsetzen.

Aufgrund dieser Ausgestaltung kann gemäß einer Weiterbildung das Befestigungsstück dadurch hergestellt werden, daß es von einem endlosen Strangpreßprofil abgelängt wird. In diesem Falle ist die Materialausnutzung des Strangpreßprofils besonders günstig, wenn das Befestigungsstück eine Projektion in einer zu der Achse der Querbohrung rechtwinkligen Ebene aufweist, die rechteckig ist.

Um günstige Voraussetzungen für die Auflage des Kopfes der Befestigungsschraube oder der zugehörigen Befestigungsmutter zu erreichen und andererseits gleichzeitig möglichst niedrig zu bauen, ist das Mittelstück im Querschnitt rechteckig, so daß sich zusammen mit den Flanschen ein abgeflachtes Sechseck ergibt. Auch das Mittelstück kann zum Zwecke der besseren Materialausnutzung einen Hohlraum enthalten.

Als Material für das Befestigungsstück eignen sich Leichtmetallegierungen, beispielsweise Aluminiumlegierungen, die im Spritzgußverfahren oder im Strangpreßverfahren verarbeitet sind. Auch Kunststoff mit entsprechender Festigkeit kommt als Material für das Befestigungsstück in Frage.

In der Zeichnung ist ein Ausführungsbeispiel des Gegenstandes der Erfindung dargestellt. Es zeigen:

Fig. 1 ein Fahrrad, bei dem der Gepäckträger und die Seitenstütze mit einem Befestigungsstück gemäß der Erfindung an den zweirohrigen Abschnitten des Fahrradrahmens befestigt sind, in einer Seitenansicht,

Fig. 2 das Tretlager de Fahrrades nach Fig. 1 mit den beiden daran befestigten Hintergabelrohren unter Veranschaulichung der Anbringung des Befestigungsstücks gemäß der Erfindung und

Fig. 3 das Befestigungsstück gemäß der Erfindung in perspektivischer Darstellung.

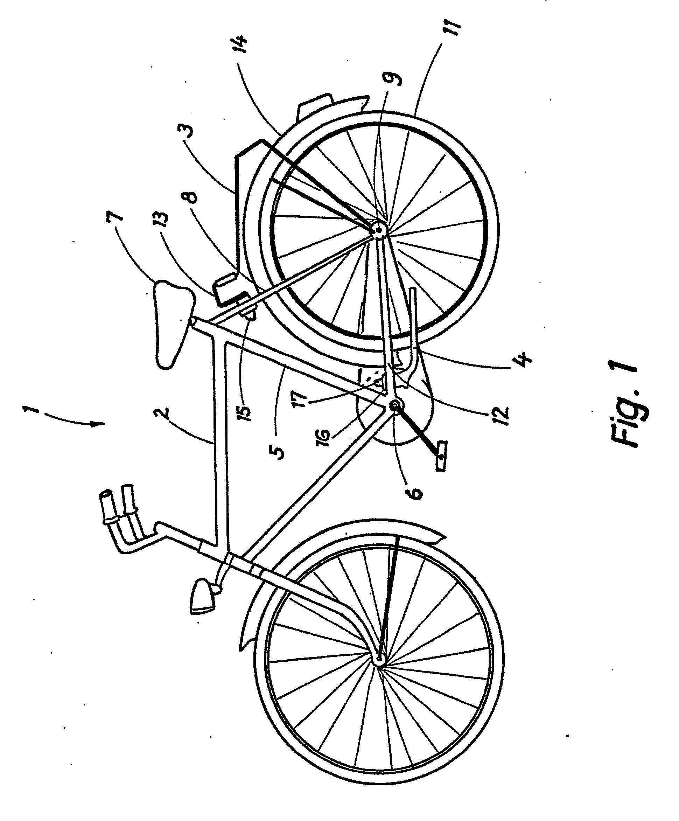

In Fig. 1 ist ein Fahrrad 1 als Beispiel für ein Zweiradfahrzeug veranschaulicht, dessen Rahmen 2 zweirohrige Abschnitte aufweist, an denen Zubehörteile wie ein Gepäckträger 3 und eine Seitenstütze 4 befestigt sind. Der Rahmen 2 enthält ein Sitzrohr 5, dessen unteres Ende an einem Tretlagergehäuse 6 angebracht und dessen oberes Ende einen Sattel 7 trägt. An dem oberen Ende des Sitzrohres 5 sind zwei im wesentlichen parallel und im Abstand zueinander verlaufende Hintergabelstreben 8 befestigt, die in Richtung auf eine Hinterachse 9 eines Hinterrades 11 verlaufen. Von dem Tretlagergehäuse 6 gehen zwei ebenfalls im wesentlichen parallel und im Abstand zueinander verlaufende Hintergabelrohre 12 aus, die im Bereich der Hinterachse 9 mit je einer Hintergabelstrebe in bekannter Weise im Bereich des Ausfallendes stoff- oder materialschlüssig verbunden sind.

Die sattelseitige Befestigung des Gepäckträgers 3 erfolgt mittels eines Befestigungsstücks 13, das an den Hintergabelstreben 8 zwischen dem Sitzrohr 5 und einem Schutzblech 14 für das Hinterrad 11 mittels einer Befestigungsschraube 15 festgeklemmt ist. In ähnlicher Weise ist die Seitenstütze 4 an den beiden Hintergabelrohren 12 zwischen dem Tretlagergehäuse 6 sowie dem Schutzblech 14 mittels eines weiteren Befestigungsstücks 16 und der zugehörigen Befestigungsschraube 17 angeklemmt.

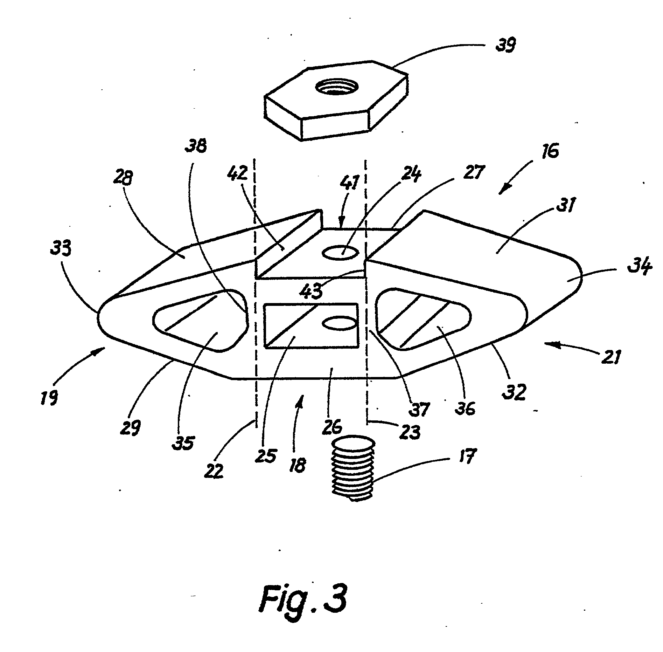

Die beiden Befestigungsstücke 13 und 16 sind untereinander gleich und haben die in Fig. 3 im einzelnen gezeigte Gestalt.

Das Befestigungsstück 13 bzw. 16 wird von einem im wesentlichen quaderförmigen Mittelstück 18 und zwei seitlich daran angeformten Flanschen 19 und 21 gebildet, wobei die gedachte Übergangsstelle zwischen dem Mittelstück 18 und den beiden Flanschen 19 und 21 durch gestrichelte Linien 22 und 23 angedeutet ist.

Das quaderfömige Mittelstück 18 enthält eine durchgehende zylindrische Querbohrung 24 zur Aufnahme der Befestigungsschraube 17 sowie einen rechtwinklig zu der Achse der Querbohrung 24 sich erstreckenden Hohlraum 25 mit rechteckförmigem Querschnitt, der sich von einer Stirnseite 26 des Befestigungsstücks bis zu der gegenüberliegenden Stirnseite 27 erstreckt. Beide im Abstand zueinander befindlichen Stirnseiten 26 und 27 verlaufen sowohl parallel zueinander als auch parallel zu der Achse der Querbohrung 24.

Beide Flansche 19 und 21 haben jeweils die Gestalt eines spitzwinkligen Dreikantprismas, das mit einer Seitenfläche bei 22 bzw. 23 an das Mittelstück 18 angeformt ist, während seine anderen beiden Seitenflächen 28 und 29 bzw. 31 und 32 die Auflageflächen des Befestigungsstücks 16 auf den Rahmenteilen bilden. Die Grundflächen der die Flansche 19 und 21 bildenden Prismen sind die entsprechenden Stirnseiten 26 und 27 des Befestigungsstücks 16. Der Querschnitt des Befestigungsstücks 16 erhält dadurch die Gestalt eines flachgedrückten Sechsecks, wobei die ebenen Flächen 28 und 29 bzw. 31 und 32 in Richtung weg von der Querbohrung 24 konvergieren und bei 33 bzw. 34 abgerundet ineinander übergehen. Hingegen konvergieren die Flächen 28 und 31 in Richtung auf die Querbohrung 24 ebenso wie dies für die ebenen Flächen 29 und 32 der beiden Flansche 19 und 21 gilt, deren Querschnitt gleich ist.

Zum Zweck der besseren Materialausnutzung und Gewichtsersparnis sowie zur Verbesserung der Elastizität der Flansche 19 und 21 in Richtung parallel zur Achse der Querbohrung 24 sind die beiden Flansche 19 und 21 mit entsprechenden Hohlräumen 35 und 36 versehen, deren Querschnitt dem Querschnitt der Flansche 19 und 21, wie dargestellt, ähnlich ist und die ebenfalls das Befestigungsstück 16 von der Stirnfläche 26 bis zur Stirnfläche 27 hin durchsetzen, d.h. die Hohlräume 35 und 36 sind ebenso wie der Hohlraum 25 zu beiden Seiten des Befestigungsstücks offen. Im Bereich des Mittelstücks 18 entstehen hierdurch zwei parallel und im Abstand zueinander verlaufende Stege 37 und 38, zwischen denen mittig die Querbohrung 34 hindurch verläuft.

Um das in Fig. 3 gezeigte Befestigungsstück 16 wahlweise mit einer Senkschraube als Befestigungsschraube 17 oder einer gegen Mitdrehen gesicherten Befestigungsmutter 39 verwenden zu können, enthält das Befestigungsstück 16 in seiner in Fig. 3 nicht sichtbaren Unterseite eine Ansenkung für die Querbohrung 24. In der Oberseite hingegen ist im Bereich des Mittelstücks 18 eine von der Stirnseite 26 zur Stirnseite 27 durchgehende Ausnehmung 41 vorgesehen, deren zueinander parallele Flanken 42 und 43 im Bereich der beiden Stege 37 und 38 verlaufen. Der Abstand der beiden Flanken 42 und 43 entspricht dabei der Schlüsselweite der jeweils zu verwendenden Sechskantmutter 39, die auf diese Weise an einem Mitdrehen beim Anziehen der Befestigungsschraube 17 von den beiden Flanken 42 und 43 drehfest gehindert ist, während ihre Unterseite auf dem ebenen und zur Achse der Querbohrung 24 rechtwinkligen Grund der Ausnehmung aufliegt.

Aufgrund der Gestalt des Befestigungsstücks 16 läßt sich dieses ohne weiteres aus einem entsprechend gestalteten Strangprofil durch Ablängen herstellen und erfordert, abgesehen vom Anbringen der Querbohrung 24, keine weitere Bearbeitung. Wenn als Material eine nicht oder schwer korrodierende Leichtmetallegierung verwendet wird, entfällt auch eine zusätzliche Oberflächenveredelung.

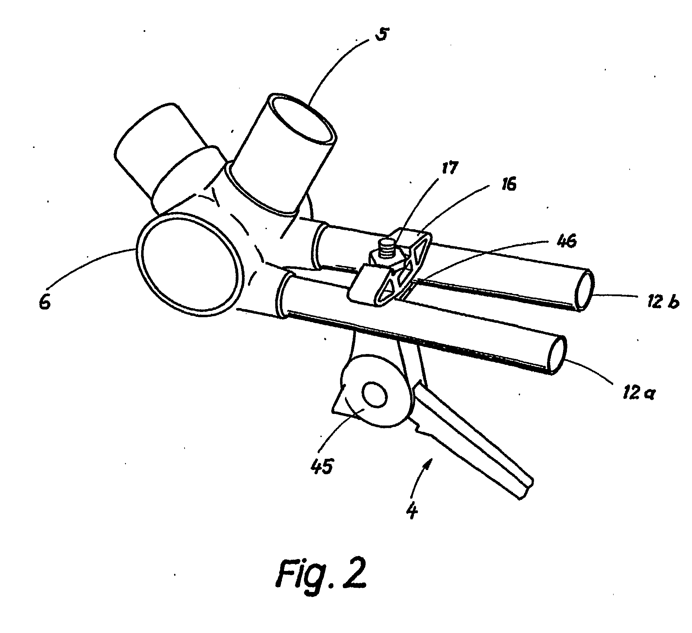

In Fig. 2 ist im einzelnen die Verwendung des Befestigungsstücks 16 veranschaulicht: Die Seitenstütze 4 enthält eine ihre Gelenk 45 tragende Anlageplatte 46, die von unten her an die beiden Hintergabelrohre 12a und 12b angelegt wird. Von oben her wird auf die Hintergabelrohre 12a und 12b das Befestigungsstück 16 aufgelegt, das sich aufgrund der zueinander konvergierenden Auflageflächen 29 und 32 bzw. 28 und 31 zwischen den beiden Hintergabelrohren 12a und 12b weitgehend selbst zentriert. Mittels der durch eine entsprechende Bohrung in der Klemmplatte 46 und die Querbohrung 24 hindurchgehenden Befestigungsschraube 17 werden die Klemmplatte 46 und das Befestigungsstück 16 und gegen die Hintergabelrohre 12a und 12b verklemmt. Zum Zweck der Montageerleichterung sitzt die Mutter 39 drehfest in der Ausnehmung 41. Ein Mitdrehen der Mutter 39 wird auf diese Weise auch ohne die Verwendung eines entsprechenden Schlüssels zum Gegenhalten sicher vermieden, weil sich das Befestigungsstück 16 zufolge seiner Vorzugslage zwischen den Hintergabelrohren 12a und 12b nicht verdrehen kann und eine Mutter 39 formschlüssig in der Ausnehmung 41 gehalten ist.

Beim Anziehen der Befestigungsschraube 17 können die Flansche 19 und 21 sich geringfügig in Richtung parallel zur Achse der Querbohrung 24 nach oben verbiegen, so daß deren elastische Deformation auch bei Erschütterungen die Befestigungsschraube 17 unter genügender Zugspannung hält, um ein Selbstlösen wirksam zu verhindern.

Infolge der Gestalt des Befestigungsstücks 16 läßt sich dieses auch bei unterschiedlichen Abständen der Hintergabelrohre 12a und 12b bzw. der Hintergabelstreben 8 verwenden, ohne daß die selbstzentrierende Wirkung verlorengeht, oder daß zum Erreichen der Selbstzentrierung eine Gestaltsänderung vorgenommen werden muß.

Für die Befestigung des Gepäckträgers 3 gilt sinngemäß das gleiche.

Da das beschriebene Befestigungsstück 16 Flansche 19 und 21 enthält, die unter Bildung jeweils zweier ebener Außenflächen 28, 29 bzw. 31, 32 in der Projektion auf eine zu der Achse der Querbohrung 24 parallelen Ebene, d.h. in die Ebene einer der Stirnflächen 26 oder 27 untereinander gleiche dreieckförmige Getalt aufweisen, wobei ihre Basis dem Mittelstück zugekehrt ist und die Außenflächen 28, 29, 31 und 32 beider Flansche 19 und 21 unter betragsmäßig gleichen Winkeln zu der Achse der Querbohrung 24 geneigt sind, kommen unabhängig von der Einbaulage des Befestigungsstücks 16 hinsichtlich des Selbstzentrierens zwischen den Rahmenrohren und der Drehsicherung des Befestigungsstücks 16 immer gleiche geometrische Verhältnisse zustande.

## Patentansprüche

1. Befestigungsstück zum Anbringen von Zubehörteilen, wie Gepäckträgern, Seitenstützen u.dgl., an zweirohrigen Abschnitten von Zweiradfahrzeugrahmen, mit einem Mittelstück (18), das eine Querbohrung (24) zur Aufnahme einer zwischen den Rahmenrohren hindurchgehenden und in dem Zubehörteil verankerten Befestigungsschraube (17) enthält und an das seitlich zwei bezüglich der Querbohrung (24) einander gegenüberliegende Flansche (19, 21) angeformt sind, die unter Bildung jeweils zweier Außenflächen (28, 29; 31, 32) in der Projektion auf eine zu der Achse der Querbohrung (24) parallele Ebene untereinander gleiche, etwa dreiecksförmige Gestalt aufweisen und mit ihrer Basis (22, 23) dem Mittelstück (18) zugekehrt sind, wobei wenigstens je eine Außenfläche eine Anlagefläche bildet und im montierten Zustand auf den Rahmenrohren aufliegt, dadurch gekennzeichnet, daß jeder der Flansche (19, 21) einen Hohlraum (35, 36) aufweist, dessen Querschnittsgestalt jener des zugehörigen Flansches (19, 21) ähnlich ist und dessen Achse rechtwinklig zu der Achse der Querbohrung (24) verläuft.

2. Befestigungsstück nach Anspruch 1, dadurch gekennzeichnet, daß beide Außenflächen (28, 29; 31, 32) jedes Flansches (19, 21) Anlageflächen darstellen.

3. Befestigungsstück nach Anspruch 1, dadurch gekennzeichnet, daß beide Außenflächen (28, 29; 31, 32) jedes Flansches (19, 21) eben sind und unter betragsmäßig gleichen Winkeln zu der Achse der Querbohrung (24) geneigt sind.

4. Befestigungsstück nach Anspruch 1, dadurch gekennzeichnet, daß jeder Hohlraum (35, 36) die Gestalt eines Prismas aufweist und den zugehörigen Flansch (19, 21) vollständig von der Stirnseite (26) bis zu der anderen Stirnseite (27) durchsetzt.

5. Befestigungsstück nach Anspruch 1, dadurch gekennzeichnet, daß seine parallel und im Abstand zueinander verlaufenden Stirnflächen (26, 27) in zueinander parallelen Ebenen liegen, die parallel zu der Achse der Querbohrung (24) verlaufen.

6. Befestigungsstück nach Anspruch 1, dadurch gekennzeichnet, daß das Mittelstück (18) im Querschnitt rechteckig ist, derart, daß sich zusammen mit den Flanschen (19, 21) ein Querschnitt ergibt, der die Gestalt eines abgeflachten Sechsecks aufweist.

7. Befestigungsstück nach Anspruch 6, dadurch gekennzeichnet, daß das Mittelstück (18) einen im Querschnitt rechteckigen durchgehenden prismatischen Hohlraum (25) enthält, dessen Achse parallel zu den Achsen der Hohlräume (35, 36) in den Flanschen (19, 21) verläuft und der von deren Hohlräumen (35, 36) unter Ausbildung von Stegen (37, 38) abgetrennt ist.

8. Befestigungsstück nach Anspruch 1, dadurch gekennzeichnet, daß es im Bereich des Mittelstücks (18) zwischen den Flanschen (19, 21) zur drehfesten Halterung einer polygonalen Schraubenmutter (39) eine von Stirnseite (26) zu Stirnseite (27) durchgehende Ausnehmung (41) mit prallelen geraden Flanken (42, 43) und einen zur Achse der Querbohrung (24) rechtwinkligen ebenen Grund aufweist.

9. Befestigungsstück nach Anspruch 1, dadurch gekennzeichnet, daß es von einem Strangpreßprofil entsprechenden Querschnitts abgelängt ist.

10. Befestigungsstück nach Anspruch 1, dadurch gekennzeichnet, daß es aus einer Aluminiumlegierung besteht.

**Claims**

1. Mounting unit for attaching accessories such as luggage carriers, side supports and the like to two-tube sections of two-wheeled vehicle frames, with a middle section (18) containing a transverse bore (24) for receiving a fastening screw (17) which extends between the frame tubes and is anchored in the accessory and having formed on the sides thereof two flanges (19, 21) which are located opposite each other with respect to the transverse bore (24) and which have an identical, approximately triangular shape, each forming two outer surfaces (28, 29; 31, 32) in the projection onto a plane parallel to the axis of the transverse bore (24), and which face the middle section (18) with their base (22, 23), with at least one outer surface of each forming a contact surface and resting on the frame tubes in the assembled state, characterized in that each of the flanges (19, 21) has a hollow space (35, 36), the cross-sectional shape of which is similar to that of the associated flange (19, 21) and the axis of which extends at right angles to the axis of the transverse bore (24).

2. Mounting unit according to claim 1, characterized in that both outer surfaces (28, 29; 31, 32) of each flange (19, 21) constitute contact surfaces.

3. Mounting unit according to claim 1, characterized in that both outer surfaces (28, 29; 31, 32) of each flange (19, 21) are plane and are inclinded at angles of identical size to the axis of the transverse bore (24).

4. Mounting unit according to claim 1, characterized in that each hollow space (35, 36) has the shape of a prism and extends through the entire associated flange (19, 21) from the one end face (26) to the other end face (27).

5. Mounting unit according to claim 1, characterized in that its end faces (26, 27) extending in parallel spaced relation to each other lie in parallel planes which run parallel to the axis of the transverse bore (24).

6. Mounting unit according to claim 1, characterized in that the middle section (18) is of rectangular cross-section, which together with the flanges (19, 21) results in a cross-section having the shape of a flattened hexagon.

7. Mounting unit according to claim 6, characterized in that the middle section (18) has a continuous prismatic hollow space (25) of rectangular cross-section, the axis of which extends parallel to the axes of the hollow spaces (35, 36) in the flanges (19, 21), and which is separated from their hollow spaces (35, 36), thereby forming webs (37, 38).

8. Mounting unit according to claim 1, characterized in that it comprises in the region of the middle section (18) between the flanges (19, 21) for rotationally fixed mounting of a polygonal screw nut (39) a recess (41) extending continuously from end face (26) to end face (27) with parallel, straight flanks (42, 43) and a plane bottom extending at right angles to the axis of the transverse bore (24).

9. Mounting unit according to claim 1, characterized in that it is cut to length from an extrusion of corresponding cross-section.

10. Mounting unit according to claim 1, characterized in that it consists of an aluminium alloy.

**Revendications**

1. Pièce de fixation servant à monter des accessoires, comme des porte-bagages, des supports latéraux, et similaire, sur des parties à deux tubes de cadre de véhicule à deux roues, comportant une pièce centrale (18) qui comprend un trou transversal (24) afin de recevoir une vis de fixation (17) passant entre les tubes du cadre et ancrée dans l'accessoire, partie centrale sur laquelle sont formées latéralement deux ailes (19, 21) situées à l'opposé l'une de l'autre par rapport au trou transversal (24), qui en formant chaque fois deux faces extérieures (28, 29; 31, 32) présentent des formes à peu près triangulaires, identiques entre elles en projection sur un plan parallèle à l'axe du trou transversal (24), et dont la base (22, 23) est tournée vers la pièce centrale (18), au moins à chaque fois une face extérieure formant une face d'appui et appuyant, à l'état monté, sur les tubes du cadre, caractérisée en ce que chacune des ailes (19, 21) présente un espace creux (35, 36), dont la forme de section transversale est semblable à celle de l'aile (19, 21) associée, et dont l'axe est perpendiculaire à l'axe du trou transversal (24).

2. Pièce de fixation selon la revendication 1, caractérisée en ce que les deux faces extérieures (28, 29; 31, 32) de chaque aile (19, 21) constituent des faces d'appui.

3. Pièce de fixation selon la revendication 1, caractérisée en ce que les deux faces extérieures (28, 29; 31, 32) de chaque aile (19, 21) sont planes et inclinées d'un angle de même valeur par rapport à l'axe du trou transversal (24).

4. Pièce de fixation selon la revendication 1, caractérisée en ce que chaque espace creux (35, 36) présente la forme d'un prisme, et traverse entièrement l'aile (19, 21) associée, depuis le côté frontal (26) jusqu'à l'autre côté frontal (27).

5. Pièce de fixation selon la revendication 1, caractérisée en ce que ses faces frontales (26, 27), s'étendant parallèlement et à distance l'une de l'autre, sont situées dans des plans parallèles entre eux, qui s'étendent parallèlement à l'axe du trou transversal (24).

6. Pièce de fixation selon la revendication 1, caractérisée en ce que la pièce centrale (18) est de section transversale rectangulaire, de sorte qu'il en résulte, avec les ailes (19, 21), une section transversale qui présente la forme d'un hexagone aplati.

7. Pièce de fixation selon la revendication 6, caractérisée en ce que la pièce centrale (18) comprend un espace creux (25) prismatique qui la traverse, de section transversale rectangulaire, dont l'axe est parallèle aux axes des espaces creux (35, 36) situés dans les ailes (19, 21), cet espace creux (25) étant séparé des espaces creux (35, 36) des ailes par la formation de nervures (37, 38).

8. Pièce de fixation selon la revendication 1, caractérisée en ce qu'elle présente, dans la zone de la pièce centrale (18) située entre les ailes (19, 21), pour la fixation en rotation d'un écrou (39) polygonal, un évidement (41) continu allant du côté frontal (26) au côté frontal (27), avec des flancs (42, 43) droits parallèles et un fond plan perpendiculaire à l'axe du trou transversal (24).

9. Pièce de fixation selon la revendication 1, caractérisée en ce qu'elle est obtenue par découpage d'un profilé filé de section transversale correspondante.

10. Pièce de fixation selon la revendication 1, caractérisée en ce qu'elle est composée d'un alliage d'aluminium.

Fig. 1

Fig. 2

Fig.3